# EUROPEAN PATENT SPECIFICATION

(11) **EP 2 206 692 B1**
(45) Date of publication and mention of the grant of the patent: **11.12.2013**
(21) Application number: 09015767.8
(22) Date of filing: 20.12.2009
(51) Int. Cl.: C04B 18/02, C04B 14/38

(54) **Capsules for concrete from a fiber and ice and method of their production**
Kapseln für Beton hergestellt aus Fasern und Eis und deren Herstellungsmethode
Capsules pour beton fabriquée de fibres et de glace et leur methode de production

(30) Priority: 29.12.2008 CZ 20080846; 29.12.2008 CZ 200820728 U
(43) Date of publication of application: 14.07.2010
(73) Proprietor: Centrum dopravniho vyzkumu, v.v.i., 636 00 BRNO (CZ)
(72) Inventor: Pospisil, Karel, 616 00 Brno (CZ)
(74) Representative: Malusek, Jiri

(56) References cited:
- JP-A- 1 014 136
- JP-A- 4 209 740
- JP-A- 2000 034 803
- US-A- 4 830 669

## Description

### Technical background

The present invention relates to the reinforced concrete with added fibers, i.e. so called fibrous concrete, wherein the base substance contains dispersed reinforcing fibers made of diverse materials.

### State of the.art

The cement concrete features low tensile strength values. For this reason, the concrete elements, which are subject to tensile, bending or shearing loads, are usually made as reinforced ones. The most usual reinforcing method consists in adding steel reinforcements, thus producing the so called steel concrete, or prestressing reinforcements, thus producing the so called prestressed concrete. During the recent decades, a new technology based on the so called fibrous concrete or wired concrete has been developing wherein tensile stresses are restrained by fibers made of plastic, glass or metallic materials. Ideally, such fibers should be uniformly dispersed in the tensile zone of the concrete element and orientation in the manner ensuring the maximum reinforcing efficiency. The present-day technology, however, does not enable to achieve an effective dispersion of the above type of reinforcement in any concrete mixture, thus producing clusters consisting of unevenly dispersed reinforcing fibers. This results in an insufficient reinforcing performance of the fibers, in local reductions of the cross-sectional strength values or, if such a cluster is located close to the surface of the structure, in affecting the appearance of the respective concrete element.

The document US 3,616,589 suggests to add thin wires into the concrete mixture, such wires being adapted to form diverse shapes, such as rings, pentagons, circular leaves, partitioned rings, rings with spliced ends or the like. These objects have in so far varied sizes and shapes that they are not subject to mutual attracting forces and may be randomly oriented within the mixture. Nevertheless, such elements require expensive preparation methods that are not applicable to any other material but steel.

The document CA 2547694 A1 suggests adding steel fibers with diameters from 1.15 to 1.8 mm. The disclosure, however, does not mention any particular solution of the problem resulting from the formation of fibrous clusters and, besides that, the application of steel is unsuitable.

The document US 7,285,167 suggests adding carbon nanofibers. The disclosure neither mentions any particular solution of the problem resulting from the formation of fibrous clusters.

The document US 4,565,840 suggests adding carbon fibers having dual length, the longer ones having the values of Young's module higher than the base concrete material has and, conversely, the shorter ones having the values of Young's module lower than the base concrete material has. The preparation of such dual fibers is arduous and, moreover, it is not obvious whether the embodiment provides a sufficient solution of the aforesaid problem resulting from the formation of fibrous clusters.

The document DE 2 337 129 A1 discloses the device for batching all types of fibers, i.e. those made of steel, plastics, glass, etc., do be added into concrete mixtures. The device consists of the basic hopper made up of a pair of joint funnels, the first funnel being used for batching cement components and the second one serving for preparing concrete admixtures. The first funnel leads into the masticating worm, the latter being movably fitted in the tube located underneath the hopper, in which tube the first mixing phase takes place. Subsequently the resulting mixture made up of the individual material constituents is discharged through the overflow into the other tube, namely into the postmixing one. The postmixing tube, which is located in the opposite orientation underneath the first tube, is also equipped with the masticating worm serving as an agitating conveyer. Furthermore, the postmixing tube accommodates the outlet of the second funnel that dispenses the reinforcing fibers to be added into the mixture. The fiber dispensing funnel is equipped with the upstream feeding trough that is driven in oscillation. In this oscillating trough, the fibers are scattered in order to be prevented from forming clusters. The separated fibers are then separately poured into the second funnel from which they get into the mixture to form the final fibrous concrete mixture taken off from the outlet end of the postmixing tube. The device described above is extremely demanding with respect both to the design and to the energy consumption.

The document US 7,267,873 suggests to add fibers made of a steel wire having 0.05 to 0.3 mm in diameter into the concrete mixture in such a manner that fibrous bundles are formed that are not mutually bound any more due to their lightweight constitution. Alternatively, fibers having markedly different lengths may be used. Herein, the drawbacks consist in the use of steel on the one hand and in the demanding preparation of the fibrous bundles and/or differently sized fibers on the other hand.

In JP 01014136A carbon fiber bundels are frozen and then extrusion products of cement mixed with dispersed carbon fibers are obtained. The optimal dispersion of fibers can not be secured.

In US 4,860,669 the basic feature of the invention is, that ice pieces replace water and there is an embodiment where the ice masses are containing one fiber. But if such ice piece has approximately a ball shape it will be too big and inhomogenities will be produced in the concrete mixture. And if the fiber will be only coated with ice, one dimention of such body will be much bigger then the other dimentions and there will be problems by mixing of the mixture, there will be caverns and it is uneasy to produce homogenous mixture with isotropic arrangement of the filling elemets of concrete structure.

The objective of the present invention is to present a method of the production of the concrete reinforced with added fibers as well as the method of the prefabrication of building elements or monolithic structures with the use of such reinforced concrete, which method should enable the fibers to be uniformly distributed without having to incorporate the fibers into the mixture in any special manner or to preliminarily adapt the length or size of the same in any demanding process.

### Disclosure of the invention

The aforesaid drawbacks resulting from the use of the unsuitable "one-dimensional fiber-like" form of the reinforcing fibers or wires are eliminated by the capsules intended to be added into the reinforced fibrous concrete, wherein *each capsule consists of a frozen envelope droplet and only one coiled fiber housed inside of the droplet of ice.* Method of the production of the capsules comprising reinforcing fibers wrapped in the shells made of frozen water, wherein *one fiber is coiled and this coiled fiber is enclosed in a water droplet and the droplet is then frozen.* This results in the formation of bodies, i.e. capsules having approximately spherical or ellipsoidal shapes and similar granulometric properties to those of the aggregates used as filler for the concrete. The capsules prepared in the aforesaid way are then

admixed into the concrete mixture comprising diverse aggregate fractions. By intermixing the above constituents, a homogenous mixture containing uniformly dispersed capsules with coiled fibers is obtained. During the intermixing process, the frozen water droplets are thawed by the thermal action of the concrete mixture, thus releasing the coiled fibers that restore their original shapes, i.e. the shapes straight fibers, due to their recovery properties. This action makes the fibers uniformly dispersed within the mixture.

### Overview of the figures

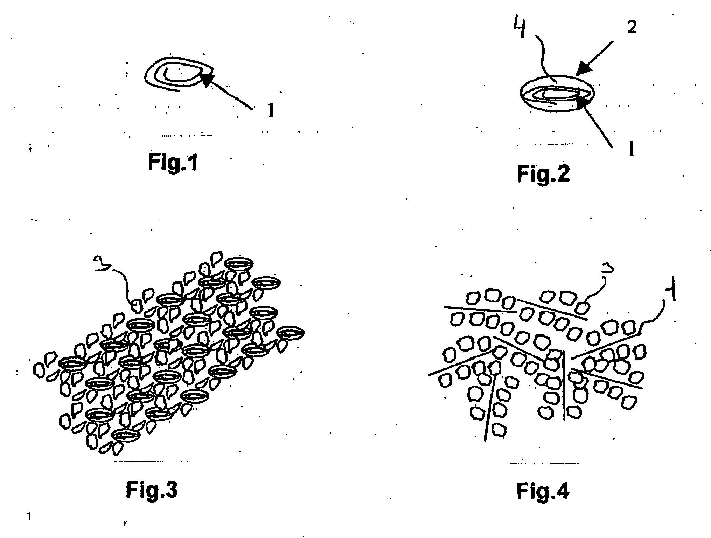

The invention will be further explained by means of the accompanying drawing wherein Fig. 1 shows a coiled fiber, Fig. 2 shows a capsule to be applied in the method according to the invention, said capsule comprising the coiled fiber as shown in Fig. 1 enclosed in a frozen water droplet, Fig. 3 shows a schematic view of the concrete mixture containing the capsules as shown in Fig. 2 and, if appropriate, a cement constituent, and Fig. 4 illustrates the mixture from Fig. 3 after the hardening stage.

### Preferred embodiment

Fig. 1 shows a coiled fiber 1. The coiled fiber 1 acquires its final shape defined by the capsule 2, which resembles an aggregate grain, in that a water droplet is added to it so as to form an envelope droplet 4 that is immediately afterwards rapidly frozen, e.g. by means of the action of liquid nitrogen having the temperature of -196°C. This action makes the coiled form of the fiber temporarily fixed, thus creating the capsule 2 comprising the coiled fiber 1 and the frozen water droplet 4 turned to ice, as seen in Fig. 2. In a preferred embodiment of the invention, the process of the production of the capsule 2 may immediately follow the production of the fiber. During the transportation and in the course of the application to the mixture, the temperature of the capsule 2 may be maintained in a usual freezing box on the level of -18°C. During the production, the capsules 2 are dispensed into the concrete mixture in a usual way, like aggregates, in the amount specified by the manufacturer of the fibers. The subsequent intermixing process creates the homogenous mixture 5, that is schematically shown in Fig. 3, and subsequently, after the ice capsules 2 become dissolved within the homogenous mixture, the released fiber restores its original straight shape due to its recovery property as seen in Fig. 4. After pouring such mixture into a formwork or applying it in another appropriate way, such as wet spraying, concrete elements or structures reinforced with uniformly dispersed fibers will be obtained.

### Example

The example considers a concrete element reinforced with polypropylene fibers having 18 mm in length. Before being applied to the concrete mixture, the fibers were processed in the above described way to become coiled elements which means that water droplets were added to them and deep frozen.

The composition of the fibrous concrete was as follows (the batching values below refer to one cubic meter of mixture): Cement CEM I 42,5 R: 380 kg, quarried aggregate classified as fraction 0 - 4: 595 kg, crushed aggregate classified as fraction 4 - 8: 241 kg, fraction 8 - 16: 430 kg, fraction 16 - 22: 516 kg, the admixture Adiment FM 62 (0.6% of the weight of cement): 2,30 kg, the admixture Adiment LP S-A 94 (0.3% of the weight of cement): 1,15 kg, coiled fibers - originally having 18 mm in length: 1,3 kg, batch water (w = 0,38): 145 kg. The concrete prepared in the way described above had the following characteristics: compression strength: 32.2 MPa, bending tensile strength: 7.1 MPa. When compared with the concrete made with the use of the method according to the invention, the concrete having the same composition with untreated fibers had approximately equal compression strength value but markedly lower bending tensile strength value: 5.7 MPa. When comparing destroyed concrete samples using a macroscopic method, the element prepared with the use of initially coiled fibers shows better dispersion of the fibers within the sampling volume.

## Claims

1. Capsules for the reinforced fibrous concrete, **characterized in that** each capsule (2) consists of a frozen envelope droplet (4) and only one coiled fiber (1) housed inside of the droplet (4) of ice.

2. Method of the production of the capsules with reinforcing fibers, **characterized in that** one fiber (1) is coiled and this coiled fiber (1) is enclosed in a water droplet (4) and the droplet (4) is then frozen.

3. Method according to claim 2, **characterized in that** freezing is achieved by means of the action of liquid nitrogen having the temperature of -196°C.

## Patentansprüche

1. Kapseln für einen verstärkten Beton, **dadurch gekennzeichnet, dass** jede Kapsel (2) aus einem tiefgekühlten Umhülltropfen (4) und aus einer individuellen zusammengewicklten Faser (1) besteht, wobei die Faser (1) in dem Umhülltropfen (4) aus Eis eingespeichert ist.

2. Methode für die Produktion der Beton verstärkten Kapseln, **dadurch gekennzeichnet, dass** die individuelle Faser (1) als eine aufgewicklte Faser vorbereitet ist, nachdem die aufgewickelte Faser (1) mit einem Wassertropfen umhüllt wird und der Tropfen danach tiefgekühlt wird.

3. Methode nach dem Anspruch 2, **dadurch gekennzeichnet, dass** das Tiefgekühlen ist durch den flüssigen Stickstoff bei der Temperatur von -196 °C. beigebracht.

## Revendications

1. Capsules pour le beton armé **caractérisée en ce que** chaque capsule (2) compris une enveloppe de la goutte gelée (4) et une fibre individuelle (1) en forme d'un element roulée et une fibre individuelle (1) est enveloppée dans une goutte de la glace.

2. Methode de fabrication les capsules pour le beton armé, **caractérisé en ce que** une fibre individuelle (1) est preparée en forme d'un element roulée et aprés quoi la fibre roulée (1) est enveloppée dans une enveloppe dans une forme de la goutte (4) de l'eau et apres la goute et congelée.

3. Methode de fabrication selon de la revendication 2, **caractérisé en ce que** la congélation et procedée avec azote liquide à la temperature de -196 °C.
